# EUROPEAN PATENT SPECIFICATION

(11) **EP 1 801 370 B1**
(45) Date of publication and mention of the grant of the patent: **09.11.2011**
(21) Application number: 05785841.7
(22) Date of filing: 16.09.2005
(51) Int. Cl.: F01N 3/02, B01D 53/94, B01D 46/42, F02D 41/02

(54) **EXHAUST EMISSION CONTROL DEVICE OF INTERNAL COMBUSTION ENGINE**
ABGASENTGIFTUNGSVORRICHTUNG FÜR VERBRENNUNGSMOTOR
DISPOSITIF DE COMMANDE DES GAZ D'ECHAPPEMENT D'UN MOTEUR A COMBUSTION INTERNE

(30) Priority: 17.09.2004 JP 2004271588
(43) Date of publication of application: 27.06.2007
(73) Proprietor: Toyota Jidosha Kabushiki Kaisha, Toyota-shi, Aichi 471-8571 (JP)
(72) Inventor: HASHIZUME, Takeshi,, Toyota-shi, Aichi 4718571 (JP)
(74) Representative: TBK
(86) International application number: PCT/JP2005/017545
(87) International publication number: WO 2006/030979

(56) References cited:
- JP-A- 4 134 115
- JP-A- 2003 120 259
- JP-A- 2004 019 496
- US-A- 4 835 964
- US-A- 4 884 398
- US-A1- 2004 093 854

## Description

### TECHNICAL FIELD

The present invention relates to an exhaust gas purification apparatus for an internal combustion engine, and in particular to a technology for recovering the collection capacity of an particulate filter.

### BACKGROUND ART

In recent years, exhaust gas purification apparatuses for an internal combustion engine to be mounted on a vehicle or the like that are equipped with a particulate filter have been widely used. The amount of particulate matter (which will be referred to as PM) that a particulate filter can collect is limited, and therefore it is necessary to perform a forced PM filter regeneration process through which the PM collected on the particulate filter is forcedly removed by oxidation.

To meet such a demand, Japanese Patent Application Laid-Open No. 2003-155914 discloses a technique in which a PM filter regeneration process is performed forcedly for a predetermined time in response to manual operation by a driver.

Japanese patent Application Laid-Open No. 2003-120259 discloses a technique in which when the exhaust gas pressure in the upstream of a particulate filter reaches a predetermined high exhaust gas pressure, a driver is notified of that fact and invited to manually activate a PM filter regeneration process, and when the exhaust gas pressure in the upstream of the particulate filter decreases below a predetermined low exhaust gas pressure, it is determined that the regeneration process may be ended.

Japanese patent Application Laid-Open No. 10-18834 discloses a technique in which a particulate filter regeneration process is activated manually on condition that the internal combustion engine is in a stopping state (not running), and when the internal combustion engine is started while the PM filter regeneration process is performed, the PM filter regeneration process is stopped.

Japanese patent Application Laid-Open No. 2004-19496 discloses a technique in which a PM filter regeneration process is terminated on condition that the amount of the PM collected on the particulate filter becomes equal to or smaller than a predetermined amount or the time over which the PM filter regeneration process is performed becomes equal to or longer than a predetermined time.

Document US 4,835,964 discloses a diesel particulate oxidizer (DPO) disposed in the exhaust. This DPO comprises a ceramic foam with catalyst. When the quantity of particulates collected is above a predetermined value, the DPO will undergo clogging. To prevent this, a high temperature gas containing oxygen is fed to the DPO to burn (regenerate) the collected particulates. In order to accelerate the normal regeneration of the DPO, there are provided a regeneration means for making a retard control of the fuel injection timing in the diesel engine, and a regeneration timing control means for controlling the operation of the regeneration means. Further, there is provided a regeneration timing detection means for detecting the regeneration timing of the DPO.

### DISCLOSURE OF THE INVENTION

In connection with the above, since the timing of manual operation by drivers can vary, it is expected that the amount of the collected PM at the time when the forced PM filter regeneration process is performed will also differ each time.

Therefore, in the case where the execution time of the PM filter regeneration process is set relatively short, there is a possibility that the collecting capacity of the particulate filter cannot be recovered sufficiently.

In view of this, the execution time of the PM filter regeneration may be set sufficiently long. However, there is a possibility that a restriction is placed on the driver or the operator for a long time in driving, since it is necessary to keep the vehicle stopped in the idling state while the manual forced PM filter regeneration process is executed.

The present invention has been made in view of the above circumstances, and has as an object to prevent lengthening of a restriction on driving that may be caused by a forced PM filter regeneration process and to suppress a decrease in the efficiency of regeneration in an exhaust gas purification apparatus for an internal combustion engine that places a restriction on driving of a vehicle while the forced PM filter regeneration process is performed.

To achieve the above described object, the following means are adopted in the present invention. A characterizing feature of the present invention resides in that in an exhaust gas purification apparatus for an internal combustion engine that places a restriction on driving of a vehicle while a forced PM filter regeneration process is executed, when the execution time of the forced PM filter regeneration process exceeds a predetermined time, the forced PM filter regeneration process is continued while the restriction on driving of the vehicle is lifted.

For example, an exhaust gas purification apparatus for an internal combustion engine according to the present invention comprises a particulate filter provided in an exhaust passage of an internal combustion engine, regeneration processing means that executes a forced PM filter regeneration process on the particulate filter when the condition of the internal combustion engine and/or the vehicle satisfies a condition for performing regeneration, restriction means for restricting driving of the vehicle while the forced PM filter regeneration process is performed, time measuring means for measuring the time elapsed since execution of the forced PM filter regeneration process is started, and regeneration control means that lifts, when the measurement value of the time measuring means exceeds a predetermined time before the condition for terminating execution of the forced PM filter regeneration process is satisfied, a restriction placed by the restriction means while causing the regeneration processing means to continue the forced PM filter regeneration process.

In the exhaust gas purification apparatus for an internal combustion engine having the above-described structure, when the execution time of the forced PM filter regeneration process exceeds the predetermined time, the restriction on driving of the vehicle is lifted even if the condition for terminating execution of the forced PM filter regeneration process is not satisfied. As a result, the time over which driving is restricted will not become excessively long. In addition, since the forced PM filter regeneration process is not terminated but continued after the restriction on driving is lifted, it is possible to suppress a decrease in the regeneration efficiency.

Therefore, according to the present invention, in an exhaust gas purification apparatus for an internal combustion engine that places a restriction on driving of a vehicle while a forced PM filter regeneration process is executed, it is possible to prevent lengthening of the restriction on driving that may be caused by a forced PM filter regeneration process and to suppress a decrease in the efficiency of regeneration of the particulate filter.

After the restriction on driving has been lifted, the driver or the operator can drive the vehicle freely, and therefore the operating state of the internal combustion engine or the driving state of the vehicle sometimes do not satisfy the condition for performing regeneration. However, the drive or the operator does not always start the vehicle immediately when the restriction on driving is lifted, and therefore it is possible to suppress a decrease in the regeneration efficiency to the minimum by continuing the forced PM filter regeneration process as long as the condition for performing regeneration is satisfied even after the restriction on driving has been lifted (namely, until the conditions for performing regeneration becomes a failure).

In the case where there is a sufficient time since the time at which the restriction on driving is lifted until the time at which the condition for performing regeneration becomes a failure, there is a possibility that the condition for terminating execution of the forced PM filter regeneration process is satisfied before the condition for performing regeneration becomes a failure. Thus, if the condition for terminating execution of the forced PM filter regeneration process is satisfied before the condition for performing regeneration becomes a failure, the forced PM filter regeneration process may be terminated at the time when the condition for terminating its execution becomes a failure.

On the other hand, if the amount of the PM remaining on the particulate filter is sufficiently small when the restriction on driving is lifted or when the condition for performing regeneration becomes a failure after the restriction on driving has been lifted, the forced PM filter regeneration process may be continued until the condition for terminating execution of the forced PM filter regeneration process is satisfied.

This is because if the amount of the PM remaining on the particulate filter is sufficiently small, the possibility that the particulate filter is excessively heated is low no matter how the operating state of the internal combustion engine and the driving state of the vehicle change.

In the present invention, the condition for performing regeneration may be, for example, that the number of revolutions of the engine is not higher than a predetermined number of revolutions, that the accelerator opening is zero, and the shift position is in a neutral position or in a position for parking.

In the present invention, the way of restricting driving of the vehicle includes, for example, an indirect restriction on driving in which a driver or the operator is invited to refrain from driving the vehicle by notification through a lamp, a loudspeaker, a display apparatus or the like, and a direct restriction on driving such as shift lock or a restriction on the speed.

### BRIEF DESCRIPTION OF THE DRAWINGS

Fig. 1 is a diagram schematically showing the structure of an internal combustion engine to which the present invention is applied.
Fig. 2 is a flow chart of a PM regeneration control routine in a first embodiment.
Fig. 3 is a flow chart of a PM regeneration control routine in a second embodiment.

### THE BEST MODE FOR CARRYING OUT THE INVENTION

In the following specific embodiments of the exhaust gas purification apparatus for an internal combustion engine according to the present invention will be described with reference to the drawings.

### (First Embodiment)

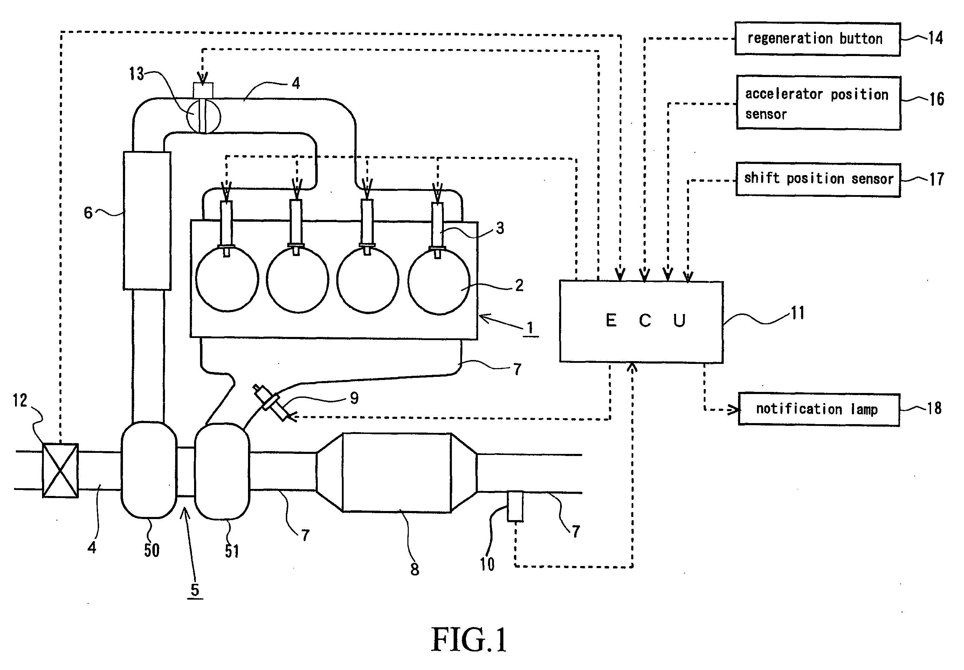

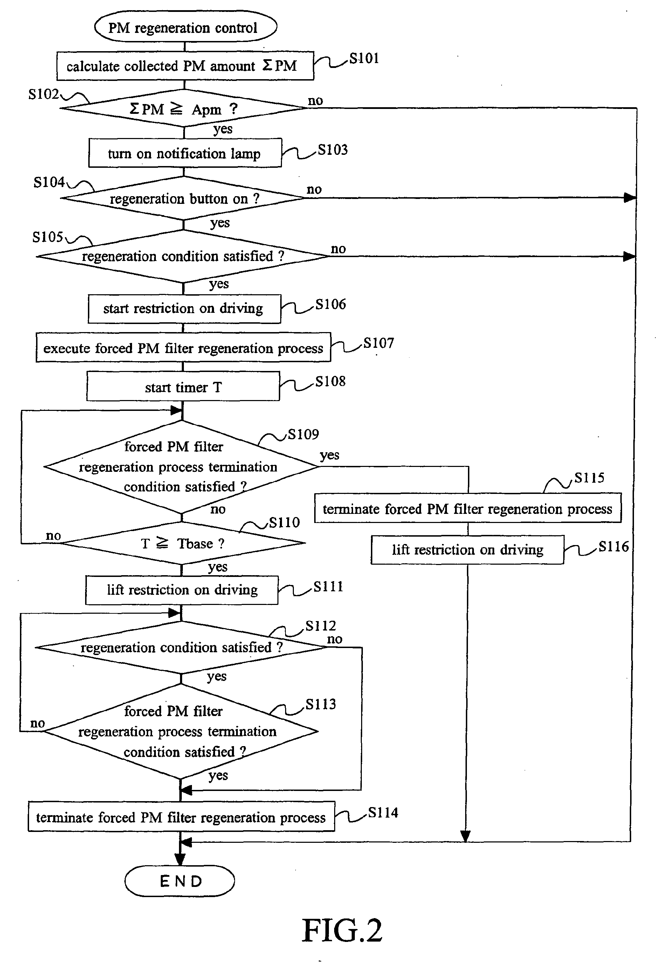

A first embodiment of the present invention will be described first with reference to Figs. 1 and 2. Fig. 1 is a diagram schematically showing the structure of an internal combustion engine to which the present invention is applied.

In Fig. 1, the internal combustion engine 1 is a compression ignition type internal combustion engine that is driven using light oil as fuel (i.e. a diesel engine). The internal combustion engine 1 has multiple cylinders 2, each of which is equipped with a fuel injection valve 3 that injects fuel directly into the cylinder 2.

The internal combustion engine 1 is connected with an intake passage 4. A compressor housing 50 of a centrifugal supercharger (i.e. a turbocharger) 5 is provided in the intake passage 4. An air flow meter 12 is provided in the intake passage 4 upstream of the compressor housing 50. An intake air cooler (or an intercooler) 6 is provide in the intake passage 4 downstream of the compressor housing 50. An intake throttle valve 13 is provided in the intake passage 4 downstream of the intercooler 6.

The internal combustion engine 1 is also connected with an exhaust passage 7. A turbine housing 51 of the turbocharger 5 is provided in the exhaust passage 7. A particulate filter 8 is provided in the exhaust passage 7 downstream of the turbine housing 51. An oxidation catalyst is supported on the carrier of the particulate filter 8.

A fuel addition valve 9 for adding fuel into the exhaust gas flowing through the exhaust passage 7 is provided in the exhaust passage 7 upstream of the turbine housing 51. An exhaust gas temperature sensor 10 is provided in the exhaust passage 7 downstream of the particulate filter 8.

An ECU 11 is annexed to the internal combustion engine 1 having the above described structure. The ECU 11 is an electronic control unit composed of a CPU, a ROM, a RAM and a backup RAM etc..

The ECU 11 is electrically connected with a regeneration button 14, an accelerator position sensor 16 and a shift position sensor 17 in addition to the above mentioned various sensors such as the exhaust gas temperature sensor 10 and the air flow meter 12.

The regeneration button 14 is a button to be operated by a driver of the vehicle on which the internal combustion engine 1 is mounted or the operator when activating manual forced PM filter regeneration process.

The ECU 11 is electrically connected with a notification lamp 18 as well as the fuel injection valve 3, the fuel addition valve 9 and the intake throttle valve 13 etc..

The notification lamp 18 is provided near the driver seat of the vehicle, and it is turned on when it is necessary to manually activate the forced PM filter regeneration process on the particulate filter 8. The notification lamp 18 may be constructed as a regeneration button 14 that is adapted to glow.

In the internal combustion engine 1 having the above described structure, the ECU 11 executes a PM filter regeneration control which constitutes the main feature of the present invention as well as known control processes such as fuel injection control etc.

In the PM filter regeneration control, the ECU 11 firstly calculates the amount of the PM collected on the particulate filter 8. The method of calculating the amount of the collected PM may be, for example, reducing the pressure difference between upstream and downstream of the particulate filter 8 to the amount of the collected PM, or determining the amount of the PM discharged from the internal combustion engine 1 based on the engine load and the number of revolutions of the engine as parameters and integrating that PM amount to obtain the amount of the collected PM.

The ECU 11 makes a determination as to whether or not the amount of the collected PM is not smaller than a predetermined amount. If the amount of the collected PM is not smaller than the predetermined amount, the ECU 11 turns on the notification lamp 18 to notify the driver or the operator of the fact that it is necessary to executes the forced PM filter regeneration process on the particulate filter 8.

If the regeneration button 14 is operated while the notification lamp 8 is on and the operating state of the internal combustion engine 1 and/or the driving state of the vehicle satisfies the condition for performing regeneration, the ECU 11 executes the forced PM filter regeneration process.

The condition for performing regeneration may be, for example, the stationary idling state (the vehicle is in a stopping state and the internal combustion engine is in a idling state). Criteria for making a determination as to whether the vehicle is in the stationary idling state may include, for example, whether the number of revolutions of the engine is not higher than a predetermined number of revolutions (for example, about 800 rpm), whether the output signal of the accelerator position sensor 16 is zero (accelerator opening = 0), and whether the output signal of the shift position sensor 17 indicates a neutral position or a parking position.

The forced PM filter regeneration process may be executed, for example, by decreasing the degree of opening of the intake throttle valve 13, increasing the fuel injection quantity to increase the idling speed to a predetermined idle-up speed (for example, about 1200 rpm) (idle-up control), and adding fuel into the exhaust gas through the fuel addition valve 9.

When the degree of opening of the intake throttle valve 13 is made small, the quantity of the intake air entering the internal combustion engine 1 decreases, and the quantity of the exhaust gas discharged from the internal combustion engine 1 also decreases accordingly. A decrease in the exhaust gas quantity leads to an increase in the quantity of heat per unit exhaust gas quantity, which in turn leads to an increase in the temperature of the exhaust gas.

When the idle-up control is performed, the quantity of fuel injected through the fuel injection valve 3 increases, and the quantity of heat discharged from the internal combustion engine 1 increases accordingly. Such an increase in the quantity of heat causes, in combination with a decrease in the exhaust gas quantity caused by the intake throttle valve 13, a further increase in the temperature of the exhaust gas.

When fuel is added into the exhaust gas through the fuel addition valve 9, the added fuel and the exhaust gas flow into the particulate filter 8. The added fuel flowing into the particulate filter 8 is oxidized by the catalyst supported on the particulate filter 8, and therefore the particulate filter 8 is heated by the oxidation reaction heat generated thereby.

Therefore, the particulate filter 8 is heated by a small quantity of high temperature exhaust gas and simultaneously heated by the reaction heat generated upon oxidation of the added fuel. Thus, the temperature of the particulate filter 8 rises rapidly up into the temperature range in which oxidation of the PM is possible.

As an alternative method of performing the forced PM filter regeneration process, the degree of opening of the exhaust throttle valve may be decreased instead of or simultaneously with decreasing the degree of opening of the intake throttle valve 13.

As still other method of performing the forced PM filter regeneration process, the timing of fuel injection through the fuel injection valve 3 may be retarded or post injection may be performed through the fuel injection valve 3 instead of or in addition to adding fuel into the exhaust gas through the fuel addition valve 9.

The above described forced PM filter regeneration process is terminated at the time when a condition for terminating the forced PM filter regeneration process is satisfied. The condition for terminating the forced PM filter regeneration process may be, for example, that the amount of the PM remaining on the particulate filter 8 is not larger than a predetermined amount (e.g. zero).

The ECU 11 restricts driving of the vehicle during execution of the forced PM filter regeneration process. Specifically, the ECU 11 causes the notification lamp 18 to keep on glowing or blinking during execution of the forced PM filter regeneration process to invite the driver or the operator to refrain from driving the vehicle.

Instead of turning on the notification lamp 18, a message to the effect that the driving of the vehicle should be refrained from may be delivered through a display apparatus such as a navigation system or an audio output apparatus such as a loudspeaker. Instead of or in addition to performing an indirect restriction on driving as above, a direct restriction on driving such as shift lock or a restriction of the speed may be effected.

In the meantime, since the timing of operation of the regeneration button 14 by the driver or the operator varies depending on occasions, the amount of the collected PM at the time the forced PM filter regeneration process is started may be excessively large in some cases. In such cases, it is expected that the execution time of the forced PM filter regeneration process will become excessively long. Especially during stationary idling, the execution time of the forced PM filter regeneration process can be further elongated since the quantity of oxygen supplied to the particulate filter 8 becomes smaller with a decrease in the flow rate of the exhaust gas flowing into the particulate filter 8. If the execution time of the forced PM filter regeneration process becomes long, the driver or the operator will be restricted from driving for a long time.

In view of this, the forced PM filter regeneration process may be executed during a time in which the flow rate of the exhaust gas is relatively high, such as while the vehicle is moving. However, if a large amount of oxygen is supplied to the particulate filter 8 when the amount of the collected PM is relatively large, there is a possibility that a large amount of PM is oxidized all at once to cause an excessive temperature rise of the particulate filter 8. Therefore, it is difficult to executes the forced PM filter regeneration process at a time other than during stationary idling state.

In view of the above, in this embodiment, the ECU 11 is adapted to lift the restriction on driving at the time when the execution time of the forced PM filter regeneration process exceeds a predetermined time and to continue the forced PM filter regeneration process. Specifically, when the execution time of the forced PM filter regeneration process exceeds the predetermined time, the ECU 11 turns off the notification lamp 18 and continues the forced PM filter regeneration process as long as the stationary idling state continues.

In the following, a PM filter regeneration control according to this embodiment will be described in detail with reference to Fig. 2. Fig. 2 is a flow chart of a PM regeneration control routine. This PM filter regeneration control routine is a routine that is stored in the ROM of the ECU 11 in advance, and executed by the ECU 11 repeatedly at predetermined regular intervals.

Firstly in step S101 of the PM filter regeneration control routine, the ECU 11 calculates the amount of the collected PM ΣPM on the particulate filter 8.

In step S102, the ECU 11 makes a determination as to whether or not said amount of the collected PM ΣPM calculated in said step S101 is equal to or larger than a predetermined amount Apm.

If it is determined in said step S102 that said collected PM amount ΣPM calculated in said step S101 is smaller than a predetermined amount Apm (ΣPM < Apm), the ECU once terminates execution of this routine.

If it is determined in said step S102 that said the collected PM amount ΣPM calculated in said step S101 is not smaller than a predetermined amount Apm (ΣPM ≥ Apm), the ECU 11 advances to step S103, where the notification lamp 18 is turned on.

In step S104, the ECU 11 makes a determination as to whether or not the regeneration button 14 is on. If it is determined in this step S104 that the regeneration button 14 is not on, the ECU 11 once terminates execution of this routine.

On the other hand, if it is determined in step S104 that the regeneration button 14 is on, the ECU 11 advances to step S105. In step S105, the ECU 11 makes a determination as to whether or not the condition for performing regeneration is satisfied.

Specifically, in step S105, the ECU 11 makes a determination as to whether or not the number of revolutions of the engine is equal to or lower than a predetermined number of revolutions, the output signal of the accelerator position sensor 16 is zero (i.e. the accelerator opening is zero), and the output signal of the shift position sensor 17 indicates the neutral position or the position for parking.

If the question in said step S105 is answered in the negative, the ECU 11 once terminates execution of this routine. On the other hand, if the question in said step S105 is answered in the affirmative, the ECU advances to step S106.

In step S 106, the ECU 11 starts a restriction on driving of the vehicle. In this embodiment, the ECU 11 causes the notification lamp 18 to glow or blink to invite the driver or the operator to refrain from driving the vehicle.

In step S107, the ECU 11 executes forced PM filter regeneration process. Specifically, the ECU 11 decreases the degree of opening of the intake throttle valve 13, increases the fuel injection quantity to raise the idling speed to the idle-up speed, and in addition causes the fuel addition valve 9 to add fuel into the exhaust gas.

In step S108, the ECU 11 starts a timer T. This timer T is adapted to measure the execution time of the forced PM filter regeneration process.

In step S109, the ECU 11 makes a determination as to whether or not the condition for terminating the forced PM filter regeneration process is satisfied. Specifically, the ECU 11 makes a determination as to whether or not the total amount of the PM oxidized in the particulate filter 8 (the oxidized PM amount) ZOpm is equal to or larger than the collected PM amount ΣPM calculated in step S101. The oxidized PM amount Σopm can be obtained using as parameters the temperature of the particulate filter 8 and the integrated value of the quantity of the exhaust gas (oxidation quantity) flowing into the particulate filter 8.

If it is determined in step S109 that the condition for terminating the forced PM filter regeneration process is not satisfied, the ECU 11 advances to step S110. In step S110, the ECU 11 makes a determination as to whether or not the time measured by the timer T is equal to or longer than a predetermined time Tbase (i.e. whether or not the forced PM filter regeneration process has been executed for the predetermined time or longer than the predetermined time).

If it is determined in said step S110 that the time measured by the timer T is shorter than the predetermined time Tbase (T < Tbase), the ECU 11 executes the process of step S109 and the subsequent steps again.

On the other hand, if it is determined in said step S110 that the time measured by the timer T is not shorter than the predetermined time Tbase (T ≥ Tbase), the ECU 11 advances to step S111. In step S111, the ECU 11 turns off the notification lamp 18 to lift the restriction on driving of the vehicle. At that time, the ECU 11 may return the idling speed to the normal idling speed. This is because if the driver starts to drive the vehicle in the state in which the idling speed is made high, there is a possibility that the startability of the vehicle can be deteriorated.

In step S112, the ECU 11 makes a determination as to whether or not the condition for performing regeneration is satisfied. If it is determined in this step S112 that the condition for performing regeneration is satisfied, the ECU 11 advances to step S113.

In step Sl13, the ECU 11 makes a determination as to whether or not the condition for terminating the forced PM filter regeneration process is satisfied again. If it is determined in this step S113 that the condition for terminating the forced PM filter regeneration process is not satisfied, the ECU 11 executes the process of said step S112 and the subsequent steps again.

On the other hand, if it is determined in step S113 that the condition for terminating the forced PM filter regeneration process is satisfied, the ECU 11 advances to step S114. In step S114, the ECU 11 terminates execution of the forced PM filter regeneration process. Specifically, the ECU 11 returns the degree of opening of the intake throttle valve 13 to the normal degree of opening and stops fuel injection through the fuel addition valve 9 (and also stops the idle-up control if the idle-up control is continued).

In the case where it is determined in the above mentioned step S112 that the condition for performing regeneration is not satisfied, namely in the case where the vehicle starts to move before the condition for terminating the forced PM filter regeneration process is satisfied, the ECU 11 skips step S113 to advance to step S114, where the ECU 11 terminates execution of the forced PM filter regeneration process immediately.

If it is determined in the above described step S109 that the condition for terminating the forced PM filter regeneration process is satisfied, namely if the condition for terminating the forced PM filter regeneration process is satisfied before the execution time of the forced PM filter regeneration process reaches the predetermined time Tbase, the ECU 11 terminates, in step S115, execution of the forced PM filter regeneration process, and turns off, in step S116, the notification lamp 18 to lift the restriction on driving of the vehicle.

As per the above, by executing the PM regeneration control routine on the ECU 11, when the execution time of the forced PM filter regeneration process reaches the predetermined time Tbase, the restriction on driving of the vehicle is lifted even if regeneration of the particulate filter 8 has not been completed. Therefore, the time over which driving is restricted will not become excessively long.

In addition, since the forced PM filter regeneration process is continued after the restriction on driving has been lifted, as long as the condition for performing regeneration is satisfied (namely, as long as the stationary idling state continues), it is possible to suppress a decrease in the efficiency of regeneration to the minimum.

As per the above, according to this embodiment, in an exhaust gas purification apparatus for an internal combustion engine that places a restriction on driving of the vehicle during execution of the PM filter regeneration process, it is possible to suppress a decrease in the efficiency of regeneration to the minimum while preventing lengthening of the restriction on driving.

### (Second Embodiment)

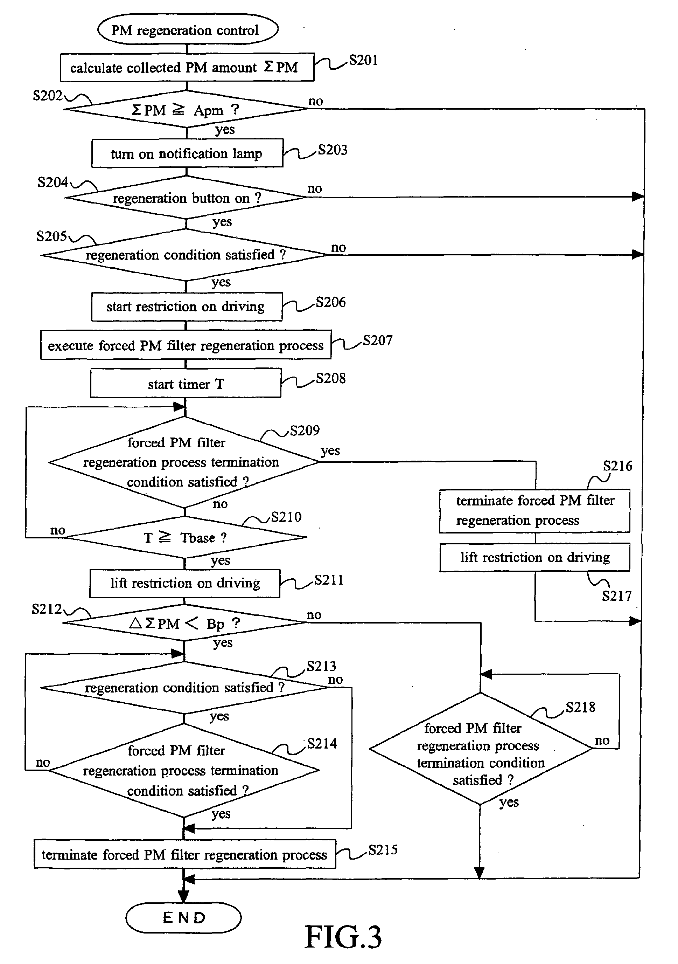

Next, a second embodiment of the exhaust gas purification apparatus for an internal combustion engine according to the present invention will be described with reference to Fig. 3.

In the above described first embodiment, a case in which the forced PM filter regeneration process is continued after the restriction on driving has been lifted, as long as the condition for performing regeneration is satisfied. In this embodiment, a case in which the forced PM filter regeneration process is continued regardless of whether the condition for performing regeneration is satisfied or not, if the amount of the PM remaining on the particulate filter 8 is sufficiently small at the time when the restriction on driving is lifted.

If the vehicle is driven freely in the state in which the amount of the PM remaining on the particulate filter 8 is relatively large, there is a possibility that a large amount of PM is oxidized all at once. For example, if the internal combustion engine 1 is driven in a decelerated manner and a fuel cut control is performed during execution of the forced PM filter regeneration process, the particulate filter 8 is exposed to an atmosphere that contains excessive oxygen. If the particulate filter 8 is exposed to an atmosphere that contains excessive oxygen during execution of the forced PM filter regeneration process, a large amount of the PM remaining on the particulate filter 8 can be oxidized all at once in some cases. In such cases, the quantity of oxidation heat generated thereby increases steeply, and there is a possibility that the temperature of the particulate filter 8 rises excessively.

On the other hand, in the case where the amount of the PM remaining on the particulate filter 8 is relatively small, the temperature of the particulate filter 8 is hard to rise excessively even if the PM remaining on the particulate filter 8 is oxidized all at once.

Therefore, by continuing the forced PM filter regeneration process, in the case where the amount of the PM remaining on the particulate filter 8 at the time when the restriction on driving is lifted is small, until the condition for terminating the forced PM filter regeneration process is satisfied, regardless of whether the condition for performing regeneration is satisfied or not, it is possible to further reduce a decrease in the efficiency of regeneration.

In the following, a PM regeneration control according to this embodiment will be described with reference to Fig. 3. Fig. 3 is a flow chart of the PM regeneration control routine according to this embodiment.

In the PM regeneration control routine shown in Fig. 3, the process in steps S201 through S211 is the same as that of steps S101 through S111 in the above described first embodiment, and the process of steps S216 and S217 is the same as that in steps S115 and S116 in the above described first embodiment, and descriptions thereof will be omitted.

In step S212, the ECU 11 makes a determination as to whether or not the amount of the PM remaining on the particulate filter 8 (which will be referred to as the remaining PM amount) ΔΣPM is smaller than a predetermined amount Bpm. The remaining PM amount ΔΣPM can be obtained by subtracting the oxidized PM amount ΣOpm from the collected PM amount ΣPM. The aforementioned predetermined amount Bpm is such a PM amount with which an excessive temperature rise of the particulate filter 8 will not occur even if the internal combustion engine 1 is driven in a decelerated manner while the vehicle is moving.

In this step, the value of the oxidized PM amount ΣOpm used may be the value calculated in step S209 or it may be newly calculated at the time when step S212 is executed.

If it is determined in step S212 that the remaining PM amount ΔΣPM is not smaller than the predetermined PM amount Bpm (ΔΣPM ≧ Bpm), the ECU 11 executes the process of steps S213 to S215. The process of steps S213 to S215 is the same as that of steps S112 to S114 in the above described first embodiment, and descriptions thereof will be omitted.

If it is determined in step S212 that the remaining PM amount ΔΣPM is smaller than the predetermined PM amount Bpm (ΔΣPM < Bpm), the ECU 11 advances to step S218, where the ECU 11 continues the forced PM filter regeneration process until the condition for terminating the forced PM filter regeneration process is satisfied. If it is determined in said step S218 that the condition for terminating the forced PM filter regeneration process is satisfied, the ECU 15 advances to step S215 and terminates execution of the forced PM filter regeneration process. The ECU 11 may be adapted to stop the idle-up control at the time when it is determined in said step S212 that the remaining PM amount ΔΣPM is smaller than the predetermined amount Bpm.

In this case, the ECU 11 will continue the forced PM filter regeneration process until the condition for terminating the forced PM filter regeneration process ends, even if the condition for performing regeneration becomes a failure.

In the PM regeneration control routine shown in Fig. 3, if it is determined in step S214 that the condition for terminating the forced PM filter regeneration process is not satisfied, the process of step S213 and the subsequent steps is executed again. However, the process of steps S212 and the subsequent steps may be executed again. In other words, if the question in said step S214 is answered in the negative, the ECU 11 may make a determination as to whether or not the remaining PM amount ΔΣPM is smaller than the predetermined amount Bpm again.

In the PM regeneration control routine shown in Fig. 3, if it is determined in step S213 that the condition for performing regeneration is not satisfied, the ECU 11 is adapted to advance to step S215 to terminate the forced PM filter regeneration process. However, the ECU 11 may be adapted not to advance to step S215 but to return to step S212. In other words, if the question in step S213 is answered in the negative, the ECU 11 may make a determination as to whether or not the remaining PM amount ΔΣPM is smaller than the predetermined amount Bpm again.

According to the above described embodiment, it is possible to prevent lengthening of the time over which driving is restricted as is the case with the above descried first embodiment, and in addition it is possible to further reduce a decrease in the efficiency of regeneration.

The description of this embodiment has been directed to a case in which if the remaining PM amount at the time when the restriction on driving is lifted is smaller than a predetermined amount, the forced PM filter regeneration process is continued until the condition for terminating the forced PM filter regeneration process is satisfied. However, the forced PM filter regeneration process may be continued until the condition for terminating the forced PM filter regeneration process is satisfied even in the case where the remaining PM amount becomes smaller than a predetermined amount during the period from the time at which the restriction on driving is lifted until the time at which the condition for performing regeneration becomes a failure and in the case where the remaining PM amount is smaller than a predetermined amount at the time when the condition for performing regeneration becomes a failure.

Although in this embodiment, the predetermined time Tbase is set to a fixed value, it may be a variable value that is changed in accordance with the collected PM amount ΣPM at the time when execution of the forced PM filter regeneration process is started. In this case, the variable value may be determined in such a way that the remaining PM amount ΔΣPM at the time when the restriction on driving is lifted becomes smaller than the predetermined amount Bpm. If the variable value is determined in this way, the advantageous effect that the efficiency of regeneration hardly decreases is achieved, though there is a possibility that the time over which driving is restricted can be lengthened to some extent as compared to the above described embodiment.

## Claims

1. An exhaust gas purification apparatus for an internal combustion engine, comprising:
a particulate filter (8) provided in an exhaust passage (7) of an internal combustion engine (1);
regeneration processing means for performing a forced particulate matter filter regeneration process on said particulate filter (8) when the condition of said internal combustion engine and/or a vehicle equipped with said internal combustion engine satisfies a condition for performing regeneration;
restriction means for restricting driving of the vehicle equipped with said internal combustion engine when the forced particulate matter filter regeneration process is performed;
time measuring means (T) for measuring the time elapsed since the forced particulate matter filter regeneration is started;
**characterized by**
regeneration control means for lifting, when the measurement value of said time measuring means (T) exceeds a predetermined time before a condition for terminating the forced particulate matter filter regeneration process is satisfied, a restriction by said restriction means and causing said regeneration processing means to continue the forced particulate matter filter regeneration process.

2. An exhaust gas purification apparatus for an internal combustion engine according to claim 1, **characterized in that** said regeneration control means causes, after lifting the restriction by said restriction means, said regeneration processing means to continue the forced particulate matter filter regeneration process until said condition for performing regeneration becomes a failure or until the condition for terminating the forced particulate matter filter regeneration process is satisfied.

3. An exhaust gas purification apparatus for an internal combustion engine according to claim 1, **characterized in that** if the amount of the particulate matter remaining on said particulate filter (8) is smaller than a predetermined amount at the time when the restriction by said restriction means is lifted , said regeneration control means causes said regeneration processing means to continue the forced particulate matter filter regeneration process until the condition for terminating the forced particulate matter filter regeneration process is satisfied.

4. An exhaust gas purification apparatus for an internal combustion engine according to any one of claims 1 to 3, **characterized in that** if a request for regeneration is manually entered at a time when said condition for performing regeneration is satisfied, said regeneration processing means starts said forced particulate matter filter regeneration process.

## Patentansprüche

1. Abgasreinigungsvorrichtung für eine Brennkraftmaschine, die Folgendes aufweist:
einen Partikelfilter (8), der in einem Abgasdurchgang (7) einer Brennkraftmaschine (1) vorgesehen ist;
eine Regenerationsablaufeinrichtung zum Durchführen eines Zwangspartikelfilterregenerationsablaufs an dem Partikelfilter (8), wenn die Bedingung der Brennkraftmaschine und/oder eines Fahrzeugs, das mit der Brennkraftmaschine ausgestattet ist, eine Bedingung zum Durchführen einer Regeneration erfüllt;
eine Beschränkungseinrichtung zum Beschränken eines Antreibens des Fahrzeugs, das mit der Brennkraftmaschine ausgerüstet ist, wenn der Zwangspartikelfilterregenerationsablauf durchgeführt ist;
eine Zeitmesseinrichtung (T) zum Messen der Zeit, die abgelaufen ist, seit die Zwangspartikelfilterregeneration gestartet ist;
**gekennzeichnet durch**
eine Regenerationssteuereinrichtung zum Aufheben einer Beschränkung **durch** die Beschränkungseinrichtung, wenn der Messwert der Zeitmesseinrichtung (T) eine vorbestimmte Zeit überschreitet, bevor eine Bedingung zum Beenden des Zwangspartikelfilterregenerationsablaufs erfüllt ist, und zum Veranlassen der Regenerationsablaufeinrichtung, den Zwangspartikelfilterregenerationsablauf fortzuführen.

2. Abgasreinigungsvorrichtung für eine Brennkraftmaschine nach Anspruch 1, **dadurch gekennzeichnet, dass** die Regenerationssteuereinrichtung nach einem Aufheben der Beschränkung durch die Beschränkungseinrichtung die Regenerationsablaufeinrichtung veranlasst, den Zwangspartikelfilterregenerationsablauf fortzuführen, bis die Bedingung zum Durchführen einer Regeneration zu einer Nichterfüllung wird oder bis die Bedingung zum Beenden des Zwangspartikelfilterregenerationsablaufs erfüllt ist.

3. Abgasreinigungsvorrichtung für eine Brennkraftmaschine nach Anspruch 1, **dadurch gekennzeichnet, dass**, falls die Menge von Fremdstoffen, die auf dem Partikelfilter (8) verbleibt, kleiner als eine vorbestimmte Menge zu dem Zeitpunkt ist, wenn die Beschränkung durch die Beschränkungseinrichtung aufgehoben ist, die Regenerationssteuereinrichtung die Regenerationsablaufeinrichtung veranlasst, den Zwangspartikelfilterregenerationsablauf fortzuführen, bis die Bedingung zum Beenden des Zwangspartikelfilterregenerationsablaufs erfüllt ist.

4. Abgasreinigungsvorrichtung für eine Brennkraftmaschine nach einem der Ansprüche 1 bis 3, **dadurch gekennzeichnet, dass**, falls eine Anforderung zur Regeneration manuell zu einem Zeitpunkt eingegeben ist, wenn die Bedingung zum Durchführen einer Regeneration erfüllt ist, die Regenerationsablaufeinrichtung den Zwangspartikelfilterregenerationsablauf startet.

## Revendications

1. Équipement de purification de gaz d'échappement pour un moteur à combustion interne, comprenant :
un filtre à particules (8) disposé dans un conduit d'échappement (7) d'un moteur à combustion interne (1) ;
un moyen de traitement de régénération destiné à effectuer un traitement de régénération forcée de filtre à matière particulaire sur ledit filtre à particules (8) lorsque l'état dudit moteur à combustion interne et/ou d'un véhicule équipé dudit moteur à combustion interne satisfait une condition pour effectuer une régénération ;
un moyen de limitation destiné à limiter la conduite du véhicule équipé dudit moteur à combustion interne lorsque se fait le traitement de régénération forcée de filtre à matière particulaire ;
un moyen de mesure de temps (T) destiné à mesurer le temps écoulé depuis le démarrage de la régénération forcée de filtre à matière particulaire,
**caractérisé par** un moyen de commande de régénération destiné à aboutir, lorsque la valeur mesurée dudit moyen de mesure de temps (T) excède un temps prédéterminé avant que soit satisfaite une condition pour terminer le traitement forcé de régénération de filtre à matière particulaire, la limitation par ledit moyen de limitation et à faire que ledit moyen de traitement de régénération continue le traitement de régénération forcée de filtre à matière particulaire.

2. Équipement de purification de gaz d'échappement pour un moteur à combustion interne selon la revendication 1, **caractérisé en ce que** ledit moyen de commande de régénération fait, après abolition de la limitation par ledit moyen de limitation, que ledit moyen de traitement de régénération continue le traitement de régénération forcée de filtre à matière particulaire jusqu'à ce que ladite condition pour effectuer une régénération devienne une panne ou jusqu'à ce que soit satisfaite la condition pour terminer le traitement de régénération forcée de filtre à matière particulaire.

3. Équipement de purification de gaz d'échappement pour un moteur à combustion interne selon la revendication 1, **caractérisé en ce que**, si la quantité de matière particulaire restant sur ledit filtre à particules (8) est plus petite qu'une quantité prédéterminée au moment où est abolie la limitation par ledit moyen de limitation, ledit moyen de commande de régénération fait que ledit moyen de traitement de régénération continue le traitement de régénération forcée de filtre à matière particulaire jusqu'à ce que soit satisfaite la condition pour terminer le traitement de régénération forcée de filtre à matière particulaire.

4. Équipement de purification de gaz d'échappement pour un moteur à combustion interne selon l'une quelconque des revendications 1 à 3, **caractérisé en ce que**, si une demande de régénération est entrée manuellement à un moment où est satisfaite ladite condition pour effectuer une régénération, ledit moyen de traitement de régénération démarre ledit traitement de régénération forcée de filtre à matière particulaire.
